# EUROPÄISCHE PATENTSCHRIFT

(11) **EP 0 646 777 B1**
(45) Veröffentlichungstag und Bekanntmachung des Hinweises auf die Patenterteilung: **18.02.1998**
(21) Anmeldenummer: 94113504.8
(22) Anmeldetag: 30.08.1994
(51) Int. Cl.: G01G 19/02, G01G 3/13

(54) **Radlastsensor mit piezoelektrischem Messelement sowie Verfahren zum Herstellen des Radlastsensors**
Wheel load sensor with piezoelectric measuring element and method of producing the wheel load sensor
Capteur pour mesurer la charge d'une roue avec un élément de détection piézoélectrique ainsi que procédé de fabrication du capteur

(30) Priorität: 01.10.1993 DE 4333532
(43) Veröffentlichungstag der Anmeldung: 05.04.1995
(73) Patentinhaber: KIH Kommunikations Industrie Holding Aktiengesellschaft, 76275 Ettlingen (DE)
(72) Erfinder: Gassner, Siegfried, New Zealand (NZ); Cal, Joe, Chambersburg PA 17201 (US)
(74) Vertreter: Geitz, Heinrich, Dr.-Ing.

(56) Entgegenhaltungen:
- EP-A- 0 231 669
- EP-A- 0 491 655
- FR-A- 2 567 550
- FR-A- 2 596 568

## Beschreibung

Die Erfindung bezieht sich auf einen in einer Vergußmasse positionierten Radlastsensor für den Einbau in eine Aussparung eines Straßenbelags oder dergleichen, mit einem als Kabel ausgebildeten piezoelektrischen Meßelement, das einen als Innenelektrode dienenden Leiter umschließt und von wenigstens einem Hohlleiter als Außenelektrode umschlossen sowie in den Belag einer Fahrbahn einbaubar ist. Ferner bezieht sich die Erfindung auf ein Verfahren zum Herstellen eines derartigen Radlastsensors.

Radlastsensoren dieser Art sowie Verfahren zu deren Herstellung sind bereits bekannt und etwa in der EP-0 231 669 beschrieben. Als piezoelektrische Meßelemente werden dabei meist runde piezoelektrische Kabel oder auch streifenförmige piezoelektrische Filme verwendet. Ein derartiges Kabel ist aus der FR-2 596 568 bekannt. Als Radlastsensor umfassen diese Kabel einen inneren Leiter und sind ihrerseits von einem Hohlleiter umschlossen und diese Sensoranordnung ist in einem einseitig offenen Profilrohr aufgenommen sowie in Vergußmasse eingebettet.

Unbefriedigend bei diesen bekannten Radlastsensoren ist, daß die beim Überfahren des in einer Ausnehmung des Straßenbelages angeordneten Sensors unvermeidbar auftretenden horizontale Lastkomponenten unerwünschtermaßen in die Meßergebnisse eingehen. Diese Horizontalkomponenten beruhen darauf, daß die Räder des Meßobjektes beim Überrollen horizontalen Schub in Fahrtrichtung erzeugen, der stark von der Fahrgeschwindigkeit und vom Zustand der Fahrbahnoberfläche abhängig ist.

Der Erfindung liegt daher die Aufgabe zugrunde, einen in Aufbau und Herstellung einfachen Radlastsensor sowie ein Verfahren zu dessen Herstellung zu schaffen, bei dem die Meßgenauigkeit störende Horizontalkomponenten bei der Messung minimiert werden und dadurch das piezoelektrische Meßelement präzise den vertikalen Druckkomponenten der jeweiligen Radlast entsprechende elektrische Signale abgibt.

Diese Aufgabe ist in vorrichtungstechnischer Hinsicht dadurch gelöst, daß bei dem Radlastsensor nach dem Oberbegriff des Patentanspruchs 1 zur Ebene des Straßenbelages etwa parallel verlaufende Wandabschnitte des piezoelektrischen Meßelementes unter vorbestimmter Druckspannung zwischen den angrenzenden Wandbereichen des die Außenelektrode bildenden Hohlleiters und die übrigen Wandabschnitte des piezoelektrischen Meßelementes im Hohlleiter beabstandet von dessen sonstigen Wandungen aufgenommen sind.

Bei dem eingesetzten piezoelektrischen Meßelement kann es sich um ein beim Verformen des Hohlleiters flachgedrücktes, ursprünglich jedoch rundes Kabel handeln. Es kann aber auch von vornherein ein Flachkabel eingesetzt werden, dessen Flachseiten dann zwischen den angrenzenden Wandbereichen des flachgedrückten Hohlleiters eingespannt sind. Angesichts dieser Einspannung ist der Radlastsensor äußerst empfindlich und es ist ein Einbau unter der Flachbahnoberfläche möglich.

Ein in eine Aussparung im Straßenbelag einbaubares Radlastsensorsystem ist aus der EP 0 491 655 bereits vorbekannt, bei dem unter Ausnutzung des Piezoeffekts selektiv vertikale Druckkomponenten einer Belastung gemessen werden. Das Piezoelement ist dabei jedoch nicht als zwischen Innen- und Außenleiter angeordnetes Kabel ausgebildet, sondern besteht aus einer Vielzahl vertikal angeordneter Meßeinheiten, die im Innern eines Hohlleiters längs dessen axialer Erstreckung aneinandergereiht sind. Die Meßeinheiten bestehen aus jeweils paarweise einander zugeordneten Piezoscheiben, zwischen denen eine als Innenleiter fungierende metallische Folie eingespannt ist. Die Piezoscheiben sind so bemessen, daß sich zwischen ihnen und den im wesentlichen horizontalen Abschnitten des Hohlleiters Zwischenräume befinden. Dadurch sollen horizontale Druckkomponenten überwiegend nicht zur Detektion zu gelangen. Dieser Aufbau ermöglicht die elektronische Trennung von Kraftsignalen, die von verschiedenen Abschnitten des Hohlleiters stammen, etwa Radlastsignale von Fahrzeugen, die auf nebeneinanderliegenden Fahrspuren einer breiten Straße fahren. Im Unterschied zu diesem komplexen und aufwendigen Aufbau stellt die Erfindung einen in Herstellung und Anwendung einfachen Radlastsensor dar.

Während bei den Sensoren nach dem Stande der Technik gemäß der EP 0 231 669 der das piezoelektrische Meßelement umschließende Hohlleiter weitgehend vollständig am Außenmantel des piezoelektrischen Meßelementes anliegt und somit durch dessen Kontakt mit der die einlaufenden Druckwellen aufnehmenden Vergußmasse unerwünschte Horizontalkomponenten detektiert, werden bei dem Sensor nach der Erfindung lediglich solche Wandabschnitte des piezoelektrischen Meßelementes von dem Hohlleiter beaufschlagt, die in Gebrauchsstellung in der vertikalen Achse unter einem vorbestimmten Druck am Hohlleiter anliegen. Zwischen den übrigen Außenwandabschnitten des piezoelektrischen Meßelementes und den ihnen jeweils zugewandten Innenwandabschnitten des Hohlleiters sind hingegen Hohlräume ausgebildet. Durch die Ausbildung dieser Hohlräume, die sich in Gebrauchsstellung beidseitig vom piezoelektrischen Meßelement erstrecken, wird die Übertragung horizontaler Komponenten von durch die Vergußmasse einlaufenden Druckwellen auf das piezoelektrische Meßelement weitgehend vermieden.

Nach einer zweckmäßigen Ausführungsform ist die Ausdehnung des Hohlleiters in Einspannrichtung des piezoelektrischen Meßelements kleiner als in einer dazu senkrechten Richtung, so daß sich ein anisotroper Querschnittsverlauf des Hohlleiters ergibt.

Eine besonders vorteilhafte Ausgestaltung der Erfindung kann darin bestehen, daß der das piezoelektrische Meßelement umschließende Hohlleiter einen etwa ovalen Querschnitt mit dem größten Durchmesser quer zur Einspannrichtung aufweist. Dadurch sind die Hohlräume innerhalb des ovalen Querschnitts des Hohlleiters entlang des größten Durchmessers voneinander abgewandt angeordnet.

Zweckmäßigerweise können die unter Druckspannung an dem Hohlleiter anliegenden Wandabschnitte des piezoelektrischen Meßelementes annähernd planparallel ausgebildet sein. Dadurch werden von einer Senkrechten zu diesen Wandabschnitten abweichend einlaufende Druckwellen bzw. -impulse unterdrückt.

Eine andere Weiterbildung der Erfindung sieht vor, daß das piezoelektrische Meßelement in einem - in der Einbaulage - quer zur Fahrtrichtung verlaufenden Profilrohr mit offener Oberseite positioniert ist. Das Profilrohr kann dabei zwei von einem Steg vorstehende Schenkel sowie ein C-förmiges Innenprofil mit Hinterschneidungen an den die Offenseite begrenzenden Profilkanten aufweisen. Dieses Profilrohr dient zur Aufnahme der den Sensor einbettenden Vergußmasse. Die Ausgestaltung des Innenprofils verhindert eine unerwünschte Verlagerung des Sensors innerhalb des Profilrohrs.

Gleichfalls gemäß einer Weiterbildung kann der Steg des Profilrohrs als Standfuß mit beidseitig über die Profilschenkel vorstehenden Randflanschen ausgebildet sein. Eine derartige Ausbildung vermittelt eine sichere Fixation des Sensors im Belag einer Fahrbahn, wobei zweckmäßigerweise das in einer quer zur Fahrtrichtung verlaufenden Rinne im Fahrbahnbelag aufgenommene Profilrohr auch außenseitig mit Vergußmasse gleicher Beschaffenheit wie die das piezoelektrische Meßelement einbettende Vergußmasse zu vergießen ist.

Eine andere zweckmäßige Ausgestaltung der Erfindung ist durch eine Sicherung gegen das Eindringen von Feuchtigkeit zwischen die Innenelektrode und das piezoelektrische Meßelement mittels eines Anschlußadapters gekennzeichnet, wobei das Ende der Innenelektrode, das über den Hohlleiter vorsteht, in einem Schlitz des Adapters aufgenommen und der den Schlitz umgebende Bereich des Adapters dicht mit dem piezoelektrischen Meßelement verbunden ist. Bei dem Anschlußadapter kann es sich um einen H-förmigen Metalleiter handeln, in den sich von einer Stirnseite aus der das Ende der Innenelektrode aufnehmende Schlitz hineinerstreckt und der schlitzseitig von einem Ende eines das piezoelektrische Meßelement bildenden Mantels dicht umschlossen ist.

Durch das Vorsehen eines derartigen Anschlußadapters an einem Ende des Radlastsensors wird das Eindringen von Feuchtigkeit zwischen dem Meßelement und der Innenelektrode wirksam verhindert. Eine ansonsten mögliche Feuchtigkeitseinlagerung zwischen der Innenelektrode und dem piezoelektrischen Meßelement würde zu Meßungenauigkeiten führen.

Die bezüglich des Herstellens des Radlastsensors gestellte Aufgabe ist dadurch gelöst, daß das piezoelektrische Meßelement mit der in diesem aufgenommenen Innenelektrode in einen Übermaß aufweisenden Hohlleiter eingezogen und danach der Hohlleiter derart flachgedrückt wird, daß das piezoelektrische Meßelement mit voneinander abgewandten Wandabschnitten zwischen den flachgedrückten Wandbereichen des Hohlleiters unter Druck eingespannt wird und zwischen den unbeaufschlagten Außenwandabschnitten des piezoelektrischen Meßelementes und den diesen zugewandten Wandungen des Hohlleiters Hohlräume ausgebildet werden, und daß der das piezoelektrische Meßelement aufnehmende Hohlleiter derart in Vergußmasse eingebettet wird, daß - in der Einbaulage - seine eingespannten Wandbereiche sich im wesentlichen parallel zur Oberfläche des Straßenbelages erstrecken.

Damit unterscheidet sich das erfindungsgemäße Verfahren gegenüber dem Stande der Technik durch das Einspannen des piezoelektrischen Meßelementes zwischen flachgedrückten Wandabschnitten des Hohlleiters, wobei durch die besondere Ausbildung des Hohlleiters mit zwei voneinander getrennten Hohlräumen zwischen dem Meßelement und dem Hohlleiter eine Meßachse festgelegt wird. Durch deren Positionierung in der Verbundmasse ist praktisch nur eine Richtungskomponente eines Druckimpulses bzw. einer Druckwelle detektierbar.

Ein besonders einfach zu realisierendes Verfahren ist durch Verwendung eines im Querschnitt ursprünglich runden Hohlleiters gekennzeichnet, der beim Flachdrücken in eine im Querschnitt ovale Form gebracht wird.

Anhand der beigefügten Zeichnung soll nachstehend eine Ausführungsform der Erfindung näher erläutert werden. In schematischen Ansichten zeigen:
- Fig. 1: einen Radlastsensor nach dem Stand der Technik mit einem innerhalb eines Profilrohres aufgenommenen und in Vergußmasse eingebetteten piezoelektrischen Meßelement in einem Querschnitt,
- Fig. 2: ebenfalls in einem Querschnitt ein in einem ersten Verfahrensschritt in einen Übermaß aufweisenden Hohlleiter eingezogenes piezoelektrisches Meßelement,
- Fig. 3: in einer Ansicht wie in Fig. 2 die Anordnung aus piezoelektrischem Meßelement und Hohlleiter nach dem Flachdrücken des Hohlleiters in einem zweiten Verfahrensschritt, wobei das piezoelektrische Meßelement zwischen voneinander abgewandten deformierten Wandabschnitten des Hohlleiters eingespannt ist,
- Fig. 4: in einer Ansicht wie in Fig. 1 einen nach dem erfindungsgemäßen Verfahren hergestellten Radlastsensor, bei dem das piezoelektrische Meßelement in einem Profilrohr mit C-förmigem Innenprofil aufgenommen und in Verbundmasse eingebettet ist und
- Fig. 5: einen dicht mit dem Ende des piezoelektrischen Meßelementes verbundenen Anschlußadapter in einer Längsschnittansicht.

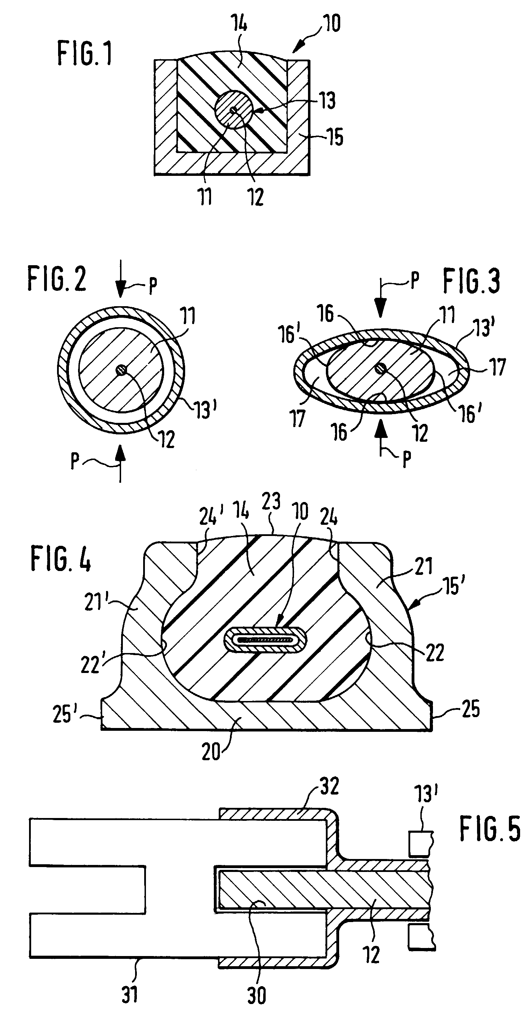

Der in Fig. 1 mit 10 bezeichnete Radlastsensor dient zum Detektieren von Radlasten im fließenden Verkehr. Dazu wird der Radlastsensor 10 quer zur Fahrtrichtung in den Belag einer Fahrbahn etwa bündig mit der Belagoberfläche eingebaut. Als druckempfindliche Sensoren werden piezoelektrische Meßelemente verwendet, bei denen es sich üblicherweise um halbkristalline Polymere in Form von Kabeln handelt.

Wie Fig. 1 zeigt, weist der Radlastsensor 10 ein als Kabel ausgeführtes piezoelektrisches Meßelement 11 auf, welches koaxial einen als Innenelektrode fungierenden Leiter 12 umschließt. Als Außenelektrode ist das piezoelektrische Meßelement 11 von einem metallischen Hohlleiter 13 umschlossen. Diese Kondensatoranordnung ist in einem mit Vergußmasse 14 ausgefüllten U-förmigen Profilrohr 15 zentrisch aufgenommen. Als Vergußmasse 14 und Übertragungsmittel für die einlaufenden von dem Meßobjekt ausgehenden Druckwellen dient üblicherweise Epoxyharz. Bei bestimmungsgemäßer Verwendung ist der Radlastsensor 10 in einer Aussparung im Belag einer Fahrbahn eingebaut, und zwar mit der Oberfläche des Straßenbelages zugewandter Offenseite des Profilrohrs 15 und quer zur Fahrtrichtung verlaufend.

In Einbaulage reagiert das piezoelektrische Meßelement 13 auf einlaufende Druckwellen oder -impulse mit einer Polarisation seiner Ladungsträger und gibt der jeweiligen Druckbeaufschlagung proportionale elektrische Signale ab. Allerdings gehen bei der dem Stande der Technik zugehörenden Anordnung nach Fig. 1 neben den eigentlich erwünschten Vertikalkomponenten der Druckwellen auch unvermeidbar auftretende Horizontalkomponenten in das Meßergebnis ein und verfälschen dieses.

Im Gegensatz zu diesem Stande der Technik wird erfindungsgemäß der Radlastsensor 10 wie folgt hergestellt:

Das piezoelektrische Meßelement 11 wird in einen querschnittsgrößeren, starren Hohlleiter 13' eingezogen (Fig. 2). Dabei können sowohl der Hohlleiter 13' wie auch das piezoelektrische Meßelement 11 einen ursprünglich runden Querschnitt haben. Danach wird der Hohlleiter 13' entlang einer senkrecht zu seiner Mittellängsachse verlaufenden Achse P derart flachgedrückt, daß er einen annähernd ovalen Querschnitt annimmt und die in dieser Druckachse P orientierten Außenwandabschnitte 16 des piezoelektrischen Meßelementes 11 zwischen seinen unter Druck stehenden und voneinander abgewandten Wandabschnitten einspannt. Die übrigen unbeaufschlagten Wandungsabschnitte 16' des piezoelektrischen Meßelements 11 sind daher gegenüber den ihnen zugewandten Innenwandabschnitten des Hohlleiters 13' beabstandet, so daß sich in der Querschnittsebene des Sensors 10 senkrecht zur Druckachse P beidseitig des piezoelektrischen Meßelementes 11 jeweils ein Hohlraum 17 ausbildet.

In der Einbaulage ist der Hohlleiter 13' in die Vergußmasse 14 eingebettet, die als Übertragungsmittel für einlaufende Druckwellen dient. Diese Druckwellen wirken mit ihren Vertikalkomponenten auf die zwischen dem Hohlleiter eingespannten Wandabschnitte 16 des piezoelektrischen Meßelements, während horizontale Komponenten eliminiert werden. Die die jeweiligen Hohlräume 17 einschließenden gekrümmten Außenwandflächen des Hohlleiters 13' können zwar von den Vertikalkomponenten der Druckwellen abweichende Komponenten, insbesondere Horizontalkomponenten, aufnehmen, diese jedoch nicht direkt auf das piezoelektrische Meßelement 11 übertragen, weil diese Wandbereiche des Hohlleiters 13' mit den übrigen Wandabschnitten 16' des piezoelektrischen Meßelementes 11 keinen Kontakt haben, wie Fig. 3 zeigt.

Indem die unter Druckspannung an dem Hohlleiter 13' anliegenden Wandabschnitte 16 des piezoelektrischen Meßelementes 11 einander gegenüberliegenden und zumindest annähernd planparallel ausgebildet sein können, wird eine in Richtung der Druckachse P orientierte Meßachse festgelegt. Bei entsprechendem Einbau des in Fig. 3 gezeigten Sensors in die Vergußmasse 14 des Profilrohrs 15, wobei die Druck- bzw. Meßachse P senkrecht zur Oberfläche des Straßenbelages verlaufend angeordnet wird, werden praktisch ausschließlich die Vertikalkomponenten einlaufender Druckwellen, die von einem Meßobjekt ausgehen, aufgenommen. Die übrigen von der Vertikalkomponenten abweichenden Komponenten werden bei dieser Anordnung praktisch nicht auf das piezoelektrische Meßelement 11 übertragen.

Bei der in Fig. 4 gezeigten Ausführungsform ist der Sensor in einem Profilrohr 15' mit C-förmigen Innenquerschnitt angeordnet, das zwei von einem Steg 20 vorstehende Schenkel 21, 21' mit Hinterschneidungen 22, 22' der die Offenseite 23 begrenzenden Längskanten 24, 24' aufweist und in der Einbaulage mit seiner Offenseite der Oberfläche des Straßenbelages zugewandt ist. Durch diese Ausgestaltung des Innenprofils des Profilrohres 15' wird eine lagesichere Halterung des Sensors in der Vergußmasse und damit im Profilrohr erreicht. Dadurch ist gewährleistet, daß der in der Vergußmasse 14 aufgenommene Sensor 10 eine präzise definierte Meßachse innerhalb des Profilrohrs hat. Ferner ist der Steg 20 des Profilrohrs 20 mit seitlich über die Schenkel 21, 21' vorstehenden Randflanschen 25, 25' ausgerüstet und dadurch als Standfuß ausgebildet. Dies gewährleistet eine sichere Verankerung im Straßenbelag beim Einbau in eine Fahrbahn.

In Fig. 5 ist eine Ausführungsform des erfindungsgemäßen Radlastsensors dargestellt, bei der ein über den Hohlleiter 13' vorstehendes Ende der Innenelektrode 12 in einer stirnseitigen Ausnehmung 30 eines im Längsschnitt H-förmigen Anschlußadapters 31 aufgenommen ist und ein Endabschnitt 32 des schlauchartig ausgebildeten piezoelektrischen Meßelements 11 den Anschlußadapter 31 dichtend umschließt.

## Patentansprüche

1. In einer Vergußmasse positionierter Radlastsensor für den Einbau in eine Aussparung eines Straßenbelags oder dergleichen, mit einem als Kabel ausgebildeten piezoelektrischen Meßelement, das einen als Innenelektrode dienenden Leiter umschließt und von wenigstens einem Hohlleiter als Außenelektrode umschlossen sowie in den Belag einer Fahrbahn einbaubar ist,
dadurch gekennzeichnet,
daß diejenigen Wandabschnitte (16) des piezoelektrischen Meßelementes (11), die in der Einbaulage zur Ebene des Straßenbelages etwa parallel verlaufen, unter vorbestimmter Druckspannung zwischen daran angrenzenden Wandbereichen des die Außenelektrode bildenden Hohlleiters (13') und die übrigen Wandabschnitte (16') des piezoelektrischen Meßelementes (11) im Hohlleiter beabstandet von dessen sonstigen Wandungen aufgenommen sind.

2. Radlastsensor nach Anspruch 1, dadurch gekennzeichnet, daß die Ausdehnung des Hohlleiters (13') in Einspannrichtung des piezoelektrischen Meßelements (11) kleiner als in einer dazu senkrechten Richtung ist.

3. Radlastsensor nach Anspruch 1 oder 2, dadurch gekennzeichnet, daß der das piezoelektrische Meßelement (11) umschließende Hohlleiter (13) einen etwa ovalen Querschnitt aufweist.

4. Radlastsensor nach einem der Ansprüche 1 bis 3, dadurch gekennzeichnet, daß die unter Druckspannung an dem Hohlleiter (13') anliegenden Wandabschnitte (16) des piezoelektrischen Meßelementes (11) annähernd planparallel sind.

5. Radlastsensor nach einem der Ansprüche 1 bis 4, dadurch gekennzeichnet, daß das piezoelektrische Meßelement (11) in einem - in der Einbaulage - quer zur Fahrtrichtung verlaufenden Profilrohr (15) mit offener Oberseite (23) positioniert ist.

6. Radlastsensor nach Anspruch 5, dadurch gekennzeichnet, daß das Profilrohr (15') zwei von einem Steg (20) vorstehende Schenkel (21, 21') sowie ein C-förmiges Innenprofil mit Hinterschneidungen (22, 22') der die Offenseite begrenzenden Profilkanten (24, 24') aufweist.

7. Radlastsensor nach Anspruch 6, dadurch gekennzeichnet, daß der Steg (20) des Profilrohrs (15') als Standfuß mit beidseitig über seine Schenkel (21, 21') vorstehenden Randflanschen (25, 25') ausgebildet ist.

8. Radlastsensor nach einem der Ansprüche 1 bis 7, gekennzeichnet durch eine Sicherung gegen das Eindringen von Feuchtigkeit zwischen die Innenelektrode (12) und das diese umgebende piezoelektrische Meßelement (11) mittels eines Anschlußadapters (31), wobei das Ende der Innenelektrode (12), das über den Hohlleiter (13') vorsteht, in einem Schlitz (30) des Adapters (31) aufgenommen sind und der den Schlitz (30) umgebende Bereich des Adapters dicht mit dem piezoelektrischen Meßelement (11) verbunden ist.

9. Radlastelement nach Anspruch 8, dadurch gekennzeichnet, daß es sich bei dem Anschlußadapter (31) um einen H-förmigen Metalleiter handelt, in den sich von einer Stirnseite aus der ein Ende der Innenelektrode (12) aufnehmende Schlitz (30) hineinerstreckt und der schlitzseitig von einem Endabschnitt (32) eines das piezoelektrische Meßelement (11) bildenden Mantels dicht umschlossen ist.

10. Verfahren zum Herstellen des Radlastsensors nach einem der Ansprüche 1 bis 9, dadurch gekennzeichnet, daß das piezoelektrische Meßelement (11) mit der in diesem aufgenommenen Innenelektrode (12) in einen Übermaß aufweisenden Hohlleiter (13') eingezogen und danach der Hohlleiter derart flachgedrückt wird, daß das piezoelektrische Meßelement mit voneinander abgewandten Wandabschnitten (16) zwischen den flachgedrückten Wandbereichen des Hohlleiters unter Druck eingespannt wird und zwischen den unbeaufschlagten Außenwandabschnitten (16') des piezoelektrischen Meßelementes und den diesen zugewandten Wandungen des Hohlleiters (13') Hohlräume (17) ausgebildet werden, und daß der das piezoelektrische Meßelement aufnehmende Hohlleiter (13') derart in Vergußmasse eingebettet wird, daß - in der Einbaulage - seine eingespannten Wandbereiche (16) sich im wesentlichen parallel zur Oberfläche des Straßenbelages erstrecken.

11. Verfahren nach Anspruch 10, gekennzeichnet durch Verwendung eines im Querschnitt ursprünglich runden Hohlleiters (13'), der beim Flachdrücken in eine im Querschnitt ovale Form gebracht wird.

## Claims

1. Wheel load sensor, which is positioned in a casting mass, for installation in a recess of a road surface or the like, with a piezoelectric measuring element which is constructed as a cable and encloses a conductor serving as an inner electrode and which is enclosed by at least one hollow conductor as outer electrode as well as is installable in the surface of a travel path, characterised thereby that those wall sections (16) of the piezoelectric measuring element (11) which in the installed position extend approximately parallel to the road surface are received, under predetermined pressure stress between adjoining wall regions, of the hollow conductor (13') forming the outer electrode and the remaining wall sections (16') of the piezoelectric measuring element (11), in the hollow conductor at a spacing from the other walls thereof.

2. Wheel load sensor according to claim 1, characterised thereby that the expansion of the hollow conductor (13') in the clamping-in direction of the piezoelectric measuring element (11) is smaller than in a direction perpendicular thereto.

3. Wheel load sensor according to claim 1 or 2, characterised thereby that the hollow conductor (13) enclosing the piezoelectric measuring element (11) has an approximately oval cross-section.

4. Wheel load sensor according to one of the claims 1 to 3, characterised thereby that the wall sections (16), which bear under pressure stress against the hollow conductor (13'), of the piezoelectric measuring element (11) are approximately plane-parallel.

5. Wheel load sensor according to one of claims 1 to 4, characterised thereby that the piezoelectric measuring element (11) is positioned by an open upper side (23) in a profile pipe (15) which - in the installed position - extends transversely to the travel direction.

6. Wheel load sensor according to claim 5, characterised thereby that the profile pipe (15') comprises two limbs (21, 21') projecting from a web (20) as well as a C-shaped inner profile with undercuts (22, 22') at the profile edges (24, 24') bounding the open side.

7. Wheel load sensor according to claim 6, characterised thereby that the web (20) of the profile pipe (15') is constructed as a stand foot with edge flanges (25, 25') projecting at both sides beyond its limbs (21, 21').

8. Wheel load sensor according to one of claims 1 to 7, characterised by a protection against the ingress of moisture between the inner electrode (12) and the piezoelectric measuring element (11), which surrounds this, by means of a connecting adapter (31), wherein the end of the inner electrode (12), which projects beyond the hollow conductor (13'), is received in a slot (30) of the adapter (31) and the region of the adapter surrounding the slot (30) is sealingly connected with the piezoelectric measuring element (11).

9. Wheel load element according to claim 8, characterised thereby that the connecting adapter (31) is an H-shaped metal conductor in which the slot (30), which receives one end of the inner electrode (12), extends out from one end face and which at the slot side is tightly enclosed by an end portion (32) of a casing forming the piezoelectric measuring element (11).

10. Method of producing a wheel load sensor according to one of claims 1 to 9, characterised thereby that the piezoelectric measuring element (11) is drawn by the inner electrode (12) received therein into a hollow conductor (13') having an oversize and thereafter the hollow conductor is flattened in such a manner that the piezoelectric measuring element is clamped in under pressure by mutually spaced wall sections (16) between the flattened wall regions of the hollow conductor, and cavities (17) are formed between the unloaded outer wall sections (16') of the piezoelectric measuring element and the walls of the hollow conductor (13') facing these, and that the hollow conductor (13') receiving the piezoelectric measuring element is embedded in casting mass in such a manner that - in the installed position - its clamped-in wall regions (16) extends substantially parallel to the top side of the road surface.

11. Method according to claim 10, characterised by use of a hollow conductor (13') which is originally round in cross-section and which is brought, in the flattening process, into a form which is oval in cross-section.

## Revendications

1. Capteur de charge de roue, positionné dans une masse de scellement, pour incorporation dans un évidement aménagé dans un revêtement routier ou analogues, avec un élément de mesure piézo-électriques configuré comme un câble, élément de mesure qui entoure un conducteur servant d'électrode interne et qui est entouré par au moins un conducteur creux servant d'électrode externe, et qui peut être encastré dans une chaussée, caractérisé en ce que les segments de paroi (16) de l'élément de mesure piézo-électrique (11), qui en position d'encastrement courent d'une manière approximativement parallèle au plan du revêtement routier, sont, sous une contrainte de pression prédéfinie, logés entre les zones de paroi, qui les délimitent, du conducteur creux (13') formant l'électrode externe et les autres segments de paroi (16') de l'élément de mesure piézo-électrique (11) sont logés dans le conducteur creux, à distance de ses autres parois.

2. Capteur de charge de roue selon la revendication 1, caractérisé en ce que l'extension du conducteur creux (13') dans la direction d'encastrement de l'élément de mesure piézo-électrique (11) est inférieure à celle qu'elle est dans une direction perpendiculaire à cette dernière.

3. Capteur de charge de roue selon la revendication 1 ou 2, caractérisé en ce que le conducteur creux (13) qui entoure l'élément de mesure piézo-électrique (11) a une section transversale approximativement ovale.

4. Capteur de charge de roue selon l'une des revendications 1 à 3, caractérisé en ce que les segments de paroi (16) de l'élément de mesure piézo-électrique (11), qui sous une contrainte de pression s'appuient contre le conducteur creux (13'), sont approximativement plan-parallèles.

5. Capteur de charge de roue selon l'une des revendications 1 à 4, caractérisé en ce que l'élément de mesure piézo-électrique (11) est positionné dans un tube profilé (15), qui en position d'encastrement court perpendiculairement au sens de la marche, et dont le côté supérieur (23) est ouvert.

6. Capteur de charge de roue selon la revendication 5, caractérisé en ce que le tube profilé (15') comporte deux branches (21, 21') dépassant d'une traverse (20), ainsi qu'un profilé interne en C comportant des contre-dépouilles (22, 22') des arêtes profilées (24, 24') qui délimitent le côté ouvert.

7. Capteur de charge de roue selon la revendication 6, caractérisé en ce que la traverse (20) du tube profilé (15') est configuré comme un pied-support avec des collerettes marginales (25, 25') qui dépassent des deux côtés de ses branches (21, 21').

8. Capteur de charge de roue selon l'une des revendications 1 à 7, caractérisé par une protection contre la pénétration d'humidité entre l'électrode interne (12) et l'élément de mesure piézo-électrique (11) qui l'entoure, à l'aide d'un adaptateur de raccordement (31), auquel cas l'extrémité de l'électrode interne (12) qui dépasse du conducteur creux (13') est logée dans une fente (30) de l'adaptateur (31), et la zone de l'adaptateur qui entoure la fente (30) est reliée d'une manière étanche à l'élément de mesure piézo-électrique (11).

9. Capteur de charge de roue selon la revendication 8, caractérisé en ce que, pour ce qui est de l'adaptateur de raccordement (31), il s'agit d'un conducteur métallique en H, dans lequel, à partir d'une face frontale, pénètre une fente (30) logeant une extrémité de l'électrode de mesure (12), et qui, côté fente, est entouré d'une manière étanche par un tronçon terminal (32) d'une gaine formant l'élément de mesure piézo-électrique (11).

10. Procédé de fabrication d'un capteur de charge de roue selon l'une des revendications 1 à 9, caractérisé en ce que l'élément de mesure piézo-électrique (11), avec l'électrode interne (12) logée dans ce dernier, est inséré dans un conducteur creux (13') comportant une surcote, puis le conducteur creux est aplati de telle sorte que l'élément de mesure piézo-électrique soit enserré, sous pression, par les segments de paroi (16), opposés l'un à l'autre, entre les zones de paroi aplaties du conducteur creux, et que des espaces creux (17) soient formés entre les segments de paroi extérieure (16') non sollicités de l'élément de mesure piézo-électrique et les parois, dirigées vers ces derniers, du conducteur creux (13'), et en ce que le conducteur creux (13') qui loge l'élément de mesure piézo-électrique est noyé dans la masse de scellement de telle sorte que, en position d'encastrement, ses zones de paroi enserrées (16) s'étendent d'une manière essentiellement parallèle à la surface du revêtement routier.

11. Procédé selon la revendication 10, caractérisé par l'utilisation d'un conducteur creux (13'), dont la section transversale est initialement circulaire, et qui, lors de l'aplatissement, prend une forme ayant une section transversale ovale.
